# EUROPÄISCHE PATENTANMELDUNG

(11) **EP 0 756 929 A2**
(43) Veröffentlichungstag der Anmeldung: **05.02.1997**
(21) Anmeldenummer: 96108814.3
(22) Anmeldetag: 01.06.1996
(51) Int. Cl.: B32B 3/20

(54) **Leichtbauplatte**

(30) Priorität: 01.08.1995 DE 19528251
(71) Anmelder: HÜLS AKTIENGESELLSCHAFT, 45764 Marl (DE)
(72) Erfinder: Hellermann, Walter, Dr., 46282 Dorsten (DE); Baron, Christian, Dr., 45721 Haltern (DE); Finke, Jürgen, Dr., 45770 Marl (DE); Ohm, Hubertus, Dr., 45721 Haltern (DE)

(57) **Zusammenfassung**

Eine mehrschichtige, einen Stützkern und zwei Deckschichten enthaltende Leichtbauplatte, deren einzelne Schichten miteinander verbunden sind und deren Stützkern aus einzelnen, seitlich miteinander verschmolzenen Röhrchenabschnitten besteht, ist dadurch gekennzeichnet, daß die Röhrchenabschnitte zweischichtig aufgebaut sind, wobei die Außenschicht im Erweichungspunkt um 10 bis 90 °C tiefer liegt als die Innenschicht.

Die Leichtbauplatte besteht aus kompatiblen thermoplastischen Materialien, so daß die Platte nach den üblichen Verarbeitungsmethoden für Thermoplaste stofflich recycliert werden kann.

## Beschreibung

Gegenstand der Erfindung ist eine mehrschichtige, einen Stützkern aufweisende Leichtbauplatte, wobei die einzelnen Schichten fest miteinander verbunden sind.

Leichtbauplatten weisen bei geringem Gewicht eine hohe Festigkeit auf. Sie bestehen im wesentlichen aus einem Stützkern, zum Beispiel aus einer Wabenstruktur, und auf dessen Stirnseiten aufgebrachten Deckschichten.

Der Stützkern hat die Aufgabe, die beiden Deckschichten auch bei hoher Belastung im gegebenen Abstand zu halten und die eingeleiteten Kräfte von einer Deckschicht auf die andere zu übertragen.

In der DE-OS 42 08 812 wird eine mehrschichtige, einen Stützkern aufweisende Leichtbauplatte beschrieben, wobei Stutzkern und Deckschichten homogen aus thermoplastischem Material bestehen. Dabei kann der Stützkern eine Wabenstruktur aufweisen und aus einzelnen seitlich miteinander verbundenen Röhrchenabschnitten bestehen.

Die seitliche Verbindung dieser einzelnen Röhrchenabschnitte miteinander ist jedoch fertigungstechnisch sehr problematisch. Es ist bisher Stand der Technik, diese Röhrchenabschnitte mit Klebstoffen unterschiedlicher chemischer Struktur, beispielsweise auf Epoxid- oder Polyurethanbasis, miteinander zu verbinden. Um eine Recyclingfähigkeit zu gewährleisten, müssen jedoch die Röhrchen des Stützkerns aus einem einheitlichen thermoplastischen Material bestehen, so daß in diesem Fall eine Verklebung nicht in Frage kommt. Zwar wäre auch denkbar, die achsenparallel zusammengelegten Rohrabschnitte thermisch zu verschweißen, jedoch ist hier eine exakte Temperaturführung notwendig, was nur schwer zu erreichen ist. Zudem muß hierbei eine erhebliche Deformation der Struktur hingenommen werden, wodurch die mechanischen Kennwerte des Stützkerns gegenüber einer optimalen röhrchenartigen Struktur deutlich verschlechtert werden.

Es war daher die Aufgabe zul lösen, mehrschichtige, einen Stützkern aufweisende Leichtbauplatten herzustellen, bei denen der Stützkern aus einzelnen, seitlich miteinander verbundenen Röhrchenabschnitten besteht, wobei einerseits die Röhrchenabschnitte verfahrenstechnisch einfach miteinander so verbunden werden, daß die röhrchenartige Struktur ohne nennenswerte Deformation erhalten bleibt, und andererseits die Leichtbauplatte aus kompatiblen thermoplastischen Materialien besteht, so daß die Platte nach den üblichen Verarbeitungsmethoden für Thermoplaste stofflich recycliert werden kann.

Diese Aufgabe wurde durch eine mehrschichtige, einen Stützkern und zwei Deckschichten enthaltende Leichtbauplatte gelöst, deren einzelne Schichten miteinander verbunden sind und deren Stützkern aus einzelnen, seitlich miteinander verschmolzenen Röhrchenabschnitten besteht, und die dadurch gekennzeichnet ist, daß die Röhrchenabschnitte zweischichtig aufgebaut sind, wobei die Außenschicht im Erweichungspunkt um 10 bis 90 °C tiefer liegt als die Innenschicht.

Die zweischichtig aufgebauten Röhrchenabschnitte werden durch Coextrusion von Röhrchen hergestellt, die anschließend auf passende Länge geschnitten werden. Coextrusion von Mehrschichtrohren ist Stand der Technik, wobei die einzelnen Schichtstärken auf bekannte Weise eingestellt werden können, sofern die Viskosität und die Verarbeitungstemperaturen der Formmassen nicht zu weit auseinanderliegen. In einer bevorzugten Ausführungsform beträgt der Anteil der Außenschicht 10 bis 50 % der Gesamtschichtstärke. Weiterhin ist es bevorzugt, daß die Außenschicht im Erweichungspunkt um 20 bis 60 °C tiefer liegt als die Innenschicht.

Der Erweichungspunkt wird nach Vicat, Verfahren A (10 N), gemäß ISO 306 (DIN 53 460) gemessen.

Für den Zweck der Erfindung ist es wichtig, daß bei den Röhrchen ein adhäsiver Verbund zwischen Innen- und Außenschicht vorliegt. Dies kann am einfachsten dadurch erreicht werden, daß die beiden verwendeten Formmassen einander ähneln. Darüber hinaus sind auch Stoffpaare bekannt, die, obwohl chemisch unterschiedlich, miteinander physikalisch verträglich sind oder miteinander reagieren und auf diese Weise Haftstellen ausbilden.

Im folgenden werden beispielhaft einige Möglichkeiten aufgeführt, die den Rahmen der Erfindung jedoch in keiner Weise begrenzen sollen:
1) Innenschicht aus einem Polyamid; Außenschicht aus einem damit verträglichen anderen Polyamid. Beispiele:
   a) Innenschicht aus PA 66, Außenschicht aus PA 6.
   b) Innenschicht aus einem Homopolyamid wie z. B. PA 12, PA 11, PA 1012, PA 612, PA 6 oder PA 66; Außenschicht aus einem davon abgeleiteten Copolyamid.
2) Innenschicht aus einem Polyamid wie z. B. PA 66; Außenschicht aus einem damit reaktiven Copolymer oder Pfropfcopolymer, z. B. auf der Basis von Styrol und Maleinsäureanhydrid, Styrol und Glycidylmethacrylat oder Propen und Maleinsäureanhydrid.
3) Innenschicht aus einem relativ hochschmelzenden reaktiven Copolymer, wie z. B. einem Polyglutarimid (M.R. Kricheldorf, Handbook of Polymer Synthesis, Part A, Verlag Marcel Dekker Inc., New York-Basel-Hongkong, S. 223 f . ; H.G. Elias, Makromoleküle, Hüthig und Wepf Verlag, Basel-Heidelberg-New York; US-PSS 2 146 209, 4 246 374) oder einem Styrol/Maleinimid/ggf. Maleinsäureanhydrid-Copolymeren; Außenschicht aus einem relativ niedrigschmelzenden Polyamid wie z. B. PA 12.
4) Innenschicht aus einem Polyester wie z. B. Polyethylenterephthalat oder Polybutylenterephthalat; Außenschicht aus einem davon abgeleiteten Copolymeren, das als Comonomer beispielsweise Adipinsäure, Dodecandisäure, Isophthalsäure, 1.4-Cyclohexandimethanol oder 2-Buten-1.4-diol enthält.
5) Innenschicht aus einem Polyester wie z. B. Polybutylenterephthalat; Außenschicht aus einem Polybutylenterephthalat/Polycarbonat-Blend.
6) Innenschicht aus einem Polyarylat, z. B. auf der Basis Terephthalsäure/Isophthalsäure/Bisphenol A; Außenschicht aus Polycarbonat.
7) Innenschicht aus einem Polyphenylenether, hergestellt beispielsweise durch oxidative Kupplung von 2.6-Dimethylphenol; Außenschicht aus Polystyrol oder aus einem Polyphenylenether/Polystyrol-Blend.
8) Innenschicht aus einem Polyolefin wie z. B. isotaktischem Polypropylen; Außenschicht aus einem damit verträglichen Polyolefin wie beispielsweise Polybuten-1, einem Propen/Ethen-Copolymer, einem Propen/Ethen/Buten-1-Terpolymer oder einem Blend aus isotaktischem Polypropylen und einem weitgehend amorphen Polyolefin wie z. B. ataktischem Polypropylen bzw. weitgehend amorphen Co- oder Terpolymeren auf Basis von Propen, Buten-1 und/oder Ethen.

Um eine höhere Steifigkeit zu erzielen, kann die Formmasse der Innenschicht sowie - weniger bevorzugt - auch die Formmasse der Außenschicht Verstärkungsfasern enthalten, beispielsweise Glas-, Kohle- oder Aramidfasern.

In einer bevorzugten Ausführungsform besteht die Innenschicht aus PA 12 oder PA 11 und die Außenschicht aus einem Copolyamid, das zu 40 bis 90 Gew.-% Grundbausteine enthält, die sich von Laurinlactam oder -Aminoundecansäure herleiten, sowie zu 60 bis 10 Gew.-% Grundbausteine, die sich von aquimolaren Mengen aliphatischer oder aromatischer Dicarbonsäuren und aliphatischer oder cycloaliphatischer Diamine herleiten. Derart aufgebaute Zweischichtrohre sowie ihre Verwendung zur Herstellung von Leichtbauplatten sind ebenfalls Gegenstand der vorliegenden Erfindung.

Als Dicarbonsäuren kommen hierbei Verbindungen der allgemeinen Formel HOOC-R-COOH infrage, wobei R einen unverzweigten oder verzweigten aliphatischen oder aromatischen Rest bedeutet, z. B. Azelainsäure, Sebacinsäure, Decandicarbonsäure, Isophthalsäure sowie bevorzugt Adipinsäure, Dodecandicarbonsäure oder Dimerfettsäure. Als Diamine eignen sich Verbindungen der allgemeinen Formel H₂N-R'-NH₂, wobei R' ein unverzweigter oder verzweigter aliphatischer oder cycloaliphatischer Rest ist, der gegebenenfalls durch ein oder mehrere gleiche oder verschiedene Heteroatome (z. B. N, O, S) unterbrochen sein-kann; Beispieie sind Hexamethylendiamin, Trimethylhexamethylendiamin, 5-Methyl-nonamethylendiamin, Decamethylendiamin, Dodecamethylendiamin, 2,4-Dimethyl-octamethylendiamin, Isophorondiamin, Bis-(p-aminocyclohexyl)-methan, 1,4-Bisaminomethyl-cyclohexan sowie Bis-(3-methyl-4-aminocyclohexyl)-methan.

Bei den erfindungsgemäß verwendeten Zweischichtrohren lassen sich die Röhrchenabschnitte über die tiefer schmelzende Außenschicht leicht verschweißen, ohne daß hierbei die höher schmelzende Innenschicht bereits erweicht. Die Röhrchenabschnitte werden somit nicht nennenswert verformt, so daß die geforderte Struktur des Wabenkerns erhalten bleibt.

Auf dem so hergestellten Stützkern können entweder thermoplastische Deckschichten aufgebracht werden oder aber es besteht auch die Möglichkeit, ein glasfaserverstärktes Kunststofflaminat naß unter Zuhilfenahme von Epoxid- oder Polyesterharz aufzubringen. Im letzten Falle beschränkt sich die Recyclingfähigkeit auf den Stützkern.

In einer bevorzugten Ausführungsform bestehen die Deckschichten jedoch aus einem Material, wie es auch für die Herstellung der Röhrchen verwendet wird, und hierbei insbesondere aus dem gleichen Material wie die Innenschicht. In diesem Fall können Stützkern und Deckschichten problemlos miteinander verschmolzen werden, beispielsweise so, wie es in der DE-OS 42 08 812 beschrieben ist.

Wenn die Deckschicht aus dem gleichen Material wie die Innenschicht der Röhrchen besteht, kann es unter Umständen vorteilhaft sein, den Stützkern zunächst ein- oder beidseitig mit einer Folie zu kaschieren, die aus dem gleichen Material wie die Außenschicht der Röhrchen besteht, bevor die Deckschichten aufgebracht werden. Alternativ hierzu kann eine derartige Folie zunächst auf die Fläche einer Deckschicht auflaminiert werden, die danach mit dem Stützkern verbunden wird. Auf diese Weise ist eine besonders einfache Verschmelzung von Stützkern und Deckschichten möglich.

Die Deckschichten können jedoch auch aus einem anderen Material als die Röhrchen bestehen, sofern sie infolge inhärenter Materialverträglichkeit mit dem Stützkern kraftschlüssig verbunden werden können, oder sofern über eine zwischengelegte Folie die Materialien kraftschlüssig miteinander verbunden werden können. Beispielsweise können ein Stützkern auf Basis von Polybutylenterephthalat und Deckschichten auf Basis von PA 12 über eine zwischengelegte Folie aus einem Polyesterschmelzkleber, der Isocyanatgruppen enthält, fest miteinander verschmolzen werden. Alternativ hierzu können die Deckschicht oder die Ober- und Unterseite des Stützkerns mittels üblicher Hotmelt-Technologie mit einem derartigen Schmelzkleber beschichtet werden.

Die Deckschichten können aus einer unverstärkten Formmasse bestehen oder aus einer Formmasse, die mit geschnittenen Fasern verstärkt ist. Derartige Deckschichten können durch Plattenextrusion besonders leicht hergestellt werden. Um höchstmögliche Festigkeiten zu erzielen, ist es jedoch bevorzugt, daß die Deckschichten mit ungeschnittenen Fasern verstärkt sind, beispielsweise mit Geweben, UD-Tapes oder Rovings. Die Herstellung derartiger Schichtwerkstoffe ist Stand der Technik; im Falle von Polyamid sei beispielsweise auf die EP-A-0 422 358 verwiesen.

Als geschnittene oder ungeschnittene Fasern werden üblicherweise Glas-, Kohlenstoff- oder Aramidfasern, jeweils einzeln oder in Kombination, verwendet.

Beim Recyceln der erfindungsgemäßen Leichtbauplatte wird diese zunächst zermahlen, wobei in den Deckschichten vorhandene ungeschnittene Fasern zu Kurzfasern zerschlagen werden. Der erhaltene Werkstoff kann dann beispielsweise für die Herstellung von Deckschichten wiederverwendet werden.

Im folgenden soll die Erfindung beispielhaft erläutert werden.

### Beispiel:

A. Verwendete Formmassen:
   - PA 1:: Ein handelsübliches PA 12 mit einem ηᵣₑₗ-Wert (gemessen an einer 0,5 gew.-%igen Lösung in m-Kresol bei 25 °C gemäß DIN 53 727/ISO 307) von 2,1 und einer Vicat-Erweichungstemperatur, gemessen mit Verfahren A (10 N) nach ISO 306 (DIN 53 460), von 170 °C.
   - PA 2:: Aus 65 Mol-% Laurinlactam und 35 Mol-% des Salzes aus Dodecandisäure und Isophorondiamin sowie 0,005 Gew.-% H₃PO₂ als Katalysator wird durch hydrolytische Polykondensation bei Temperaturen von 260 bis 280 °C und Drücken von 18 bis 20 bar, Entspannen des Wasserdampfes und Granulieren der zu Strängen verformten Schmelze ein Copolyamid hergestellt. Lösungsviskositsät ηᵣₑₗ = 2,01; Vicat- Erweichungstemperatur, gemessen mit Verfahren A, von 135 - 140 °C.
B. Extrusion der Mehrschichtrohre:
   Die Rohre werden durch Coextrusion hergestellt, wobei ein Extruder mit dem Material der Außenschicht (PA 2) und ein Extruder mit dem Material der Innenschicht (PA 1) beschickt wird.
C. Herstellung des Stützkerns
   Rohrabschnitte werden achsparallel zu Paketen zusammengelegt und durch Wärmeeinwirkung (Hindurchleiten von Heißluft) durch das Aufschmelzen der Außenschicht miteinander verklebt. Quer zu den Rohrachsen geschnitten ergeben sich dann die wabenartigen Stützkerne.
D. Herstellung der Deckschichten
   Pulver von PA 12 (ηᵣₑₗ = 1,6) wird auf Glasfasergewebe aufgestreut; die Imprägnierung des Gewebes erfolgt anschließend beim Durchlaufen eines Infrarotstrahlers, der das Polymer auf ca. 200 °C erhitzt. Die niedrige Schmelzeviskosität des PA 12 ermöglicht ein gutes Durchdringen der Faserbündel und damit eine gute Imprägnierung des Gewebes. Um eine vollständige Benetzung aller Fasern zu erhalten, werden drei Prepreglagen übereinander in einer stationären Presse bei 250 °C und 8 bar konsolidiert.
E. Leichtbauplatte
   Der entsprechend zugeschnittene Stützkern wird zusammen mit den Deckschichten sowie mit zwei dazwischenliegenden Folien, die aus dem gleichen Material wie die Außenschicht der Rohre (PA 2) bestehen, in einem geeigneten Rahmen in einer vorgeheizten Presse bei 150 °C und 8 bar verpreßt.

## Patentansprüche

1. Mehrschichtige, einen Stützkern und zwei Deckschichten enthaltende Leichtbauplatte, deren einzelne Schichten miteinander verbunden sind und deren Stützkern aus einzelnen, seitlich miteinander verschmolzenen Röhrchenabschnitten besteht,
dadurch gekennzeichnet,
daß die Röhrchenabschnitte zweischichtig aufgebaut sind, wobei die Außenschicht im Erweichungspunkt um 10 bis 90 °C tiefer liegt als die Innenschicht.

2. Leichtbauplatte gemäß Anspruch 1,
dadurch gekennzeichnet,
daß die Außenschicht der Röhrchenabschnitte im Erweichungspunkt um 20 bis 60 °C tiefer liegt als die Innenschicht.

3. Leichtbauplatte gemäß einem der Ansprüche 1 oder 2,
dadurch gekennzeichnet,
daß bei den Röhrchenabschnitten der Anteil der Außenschicht 10 bis 50 % der Gesamtschichtstärke beträgt.

4. Leichtbauplatte gemäß einem der Ansprüche 1 bis 3,
dadurch gekennzeichnet,
daß bei den Röhrchenabschnitten die Innenschicht aus PA 12 oder PA 11 und die Außenschicht aus einem Copolyamid besteht, welches zu 40 bis 90 Gew.-% Grundbausteine enthält, die sich von Laurinlactam oder ω-Aminoundecansäure herleiten, sowie zu 60 bis 10 Gew.-% Grundbausteine, die sich von äquimolaren Mengen aliphatischer oder aromatischer Dicarbonsäuren und aliphatischer oder cycloaliphatischer Diamine herleiten.

5. Leichtbauplatte gemäß einem der Ansprüche 1 bis 4,
dadurch gekennzeichnet,
daß zwischen Deckschicht und Stützkern eine Folie enthalten ist, die aus dem gleichen Material wie die Außenschicht der Röhrchen besteht.

6. Zweischichtiges Rohr, dessen Außenschicht im Erweichungspunkt um 10 bis 90 °C tiefer liegt als die Innenschicht,
dadurch gekennzeichnet,
daß die Innenschicht aus PA 12 oder PA 11 und die Außenschicht aus einem Copolyamid besteht, welches zu 40 bis 90 Gew.-% Grundbausteine enthält, die sich von Laurinlactam oder ω-Aminoundecansäure herleiten, sowie zu 60 bis 10 Gew.-% Grundbausteine, die sich von äquimolaren Mengen aliphatischer oder aromatischer Dicarbonsäuren und aliphatischer oder cycloaliphatischer Diamine herleiten.

7. Verwendung des zweischichtigen Rohres gemäß Anspruch 6 zur Herstellung einer Leichtbauplatte gemäß einem der Ansprüche 4 oder 5.
